# EUROPÄISCHE PATENTANMELDUNG

(11) **EP 0 757 233 A1**
(43) Veröffentlichungstag der Anmeldung: **05.02.1997**
(21) Anmeldenummer: 96112375.9
(22) Anmeldetag: 31.07.1996
(51) Int. Cl.: G01F 15/00

(54) **Zähler für ein fliessendes Medium, insbesondere Gas oder Wasser**

(30) Priorität: 04.08.1995 DE 19528767
(71) Anmelder: SIEMENS AKTIENGESELLSCHAFT, 80333 München (DE)
(72) Erfinder: Ossa, Martin, 90482 Nürnberg (DE); Singer, Hans, 90542 Eckental (DE)

(57) **Zusammenfassung**

Um bei einem Zähler (3) für ein fließendes Medium, inbesondere Gas oder Wasser, eine Erfassung von nicht betriebsgemäßen Zuständen, insbesondere von Manipulationen, zu ermöglichen, ist vorgesehen, daß eine Zustandsgröße des Mediums auf Überschreitung eines Grenzwertes überwacht wird. Beim Überschreiten des vorgebbaren Grenzwertes wird ein Fehlersignal erzeugt.

## Beschreibung

Die Erfindung betrifft einen Zähler für ein fließendes Medium, insbesondere Gas oder Wasser.

Bei Gaszählern gibt es - je nach Meßprinzip des Gaszählers - verschiedene Möglichkeiten von Fremdeinflüssen oder Manipulationen (nicht betriebsgemäße Zustände), die das gewünschte Zählergebnis verfälschen. Diese können von Betriebsfehlern, Betrugsversuchen oder sonstigen Störungen herrühren. Beispielsweise kann hierzu aus der Praxis die Umkehrung der Zählermeßrichtung genannt werden. Dabei wird der Zähler in seiner Meßrichtung umgedreht, so daß der Zählerstand durch eine registrierte fiktive Rückflußmenge erniedrigt wurde, was einem negativen Verbrauch entspricht.

In gewissen Maßen ist eine Rückwärtszählung bei Zählern erlaubt, da durch das Schwingungsverhalten des jeweiligen Mediums gewisse Pendelungen vorhanden sind. Rückwärtszählungen mit konventionellen Gaszählern auf mechanischer Basis konnten bisher nicht erfaßt werden. Bei der Zähleinrichtung für flüssige Medien gemäß der DE-OS 25 57 483 werden negative Impulse eines Erfassungssensors in einer Elektronik ausgeblendet, so daß diese nicht zur Auswertung kommen.

Der Erfindung liegt die Aufgabe zugrunde, einen Zähler anzugeben, der bei genauer Messung der Verbrauchswerte fehlerhafte, insbesondere durch Manipulationsversuche hervorgerufene, Zustände erfaßt und diese signalisiert.

Die Lösung der Aufgabe gelingt mit einem Zähler für ein fließendes Medium, insbesondere Wasser oder Gas, mit Mitteln zum Erfassen eines Manipulationsversuchs oder Fremdeinflusses, umfassend:
- zumindest einem Sensor zum Erfassen einer Zustandsgröße oder eines Wertes des Mediums,
- eine Erfassungseinrichtung, die mit dem Sensor verbunden ist, und
- ein Grenzwertglied, welches ein Fehlersignal erzeugt, wenn das vom Sensor (5) abgegebene Signal oder ein davon abgeleitetes Signal einen vorgegebenen Grenzwert überschreitet,
wobei der Grenzwert entsprechend einem nicht betriebsmäßigen Zustand des Mediums oder entsprechend einem vom Sensor erfaßten Signal vorgegeben ist.

Unter "nicht betriebsgemäßen Zustand" ist jeglicher Fall gemeint, der nicht durch einen Fehler des Zählers an sich hervorgerufen ist. Es wurde erkannt, daß bei einer Grenzwertbetrachtung von gegebenenfalls vorhandenen Zustandsgrößen oder Werten des Mediums zusätzliche neue Aussagen für den Betrieb gewonnen werden können. Der Wahl des Grenzwertes kommt dabei besondere Bedeutung zu. Durch die erfindungsgemäße Ausgestaltung sind Manipulationen und Störungen nachvollziehbar, was zu einer verbesserten Erfassung von Verbrauchswerten führt. Fehlerfällen kann sofort nachgegangen werden. Dies ist insbesondere bei einer Fernabfrage des Zählers von Interesse. Ein Ausfall oder eine Störung der Verbrauchserfassung kann somit schnell behoben werden.

Der Sensor kann mit Vorteil zum Erfassen einer Durchflußmenge dienen, wobei in der Erfassungseinrichtung als Zustandsgröße positive und negative Durchflußmengen gesondert speicherbar sind, und zumindest die negative Durchflußmenge auf eine Grenzwertüberschreitung überwacht wird. Damit ist auf einfache Weise eine Änderung der Einbaurichtung eines Zählers feststellbar. Dies gilt sowohl für den Ersteinbau als auch für einen späteren Umbau.

Es ist günstig, wenn der Betrag des Wertes der negativen Durchflußmenge bildbar und mit dem Wert der positiven Durchflußmengen addierbar ist. Die erhaltene Gesamtdurchflußmenge ist dann als Verbrauchswert speicherbar. Auf diese Weise hat ein Wechsel der Einbaurichtung des Zähler keinen Einfluß auf die Verbrauchserfassung. Es gehen dadurch auch keine Verbrauchswerte für eine Verrechnung verloren.

Vorteilhafterweise ist der Sensor als Ultraschallmeßeinrichtung zur Ermittlung der Laufzeit im Medium ausgebildet, wobei der erfaßte Laufzeitwert auf eine vorgegebene Grenzwertüberschreitung überwachbar ist. Ein derartiger Zähler kann somit einen Wechsel des Mediums feststellen, was auch ein Indiz für eine Manipulation ist. Ein solcher Wechsel findet in der Regel bereits beim Ausbau des Zählers statt, wobei die Umgebungsluft in die Rohrleitung eintritt.

Die Ultraschallmeßeinrichtung kann zumindest einen Schallsensor, insbesondere einen Ultraschallsensor, umfassen, wobei die Erfassungseinrichtung Mittel zum Erfassen eines Fremdgeräuschpegels aufweist. Der Fremdgeräuschpegel ist somit auf eine Grenzwertüberschreitung überwachbar. Auf diese Art können Fremdgeräuschmanipulationen, z.B. mit einer Ultraschallfernbedienung, detektiert werden. Der Zähler erkennt den Fremdeinfluß.

Es ist günstig, wenn die Ultraschallmeßeinrichtung eine wechselnde Sende- und Empfangsrichtung aufweist, wobei abwechselnd eine Laufzeitmessung im Medium mit der und gegen die Strömungsrichtung des Mediums durchgeführt wird, und wobei der Unterschied der beiden Laufzeiten auf eine Grenzwertüberschreitung überwachbar ist. Ein derartiger Zähler kann einen Gasartwechsel oder einen Temperaturwechsel erfassen, was ein Hinweis auf einen nicht betriebsgemäßen Zustand darstellt.

Der Sensor kann zur Erfassung eines Tempaturwechsels mit Vorteil alternativ oder zusätzlich auch als Temperatursensor ausgebildet sein, wobei die Temperatur auf eine Grenzwertüberschreitung überwachbar ist.

Die Erfindung, weitere Details und Vorteile werden nachfolgend anhand der FIG näher erläutert.

In der FIG ist eine Rohrleitung 1 gezeigt, in der sich ein fließendes Medium mit der Strömungs- oder Durchflußrichtung 2 bewegt. Bei dem Medium kann es sich beispielsweise um Gas oder Wasser handeln, wobei die Durchflußmenge (beispielsweise Liter/Stunde) oder eine Wärmemenge mit einem Zähler 3 erfaßt werden soll. Es kommen auch sonstige Medien, z.B. in der chemischen Industrie zu verarbeitende Flüssigkeiten, chemische Verbindungen oder Gase, in Frage.

Der Zähler 3 weist einen Sensor 5 auf, der in die Rohrleitung 1 geschaltet ist und bevorzugt nach einem Ultraschallverfahren arbeitet. Er stellt quasi eine Ultraschallmeßeinrichtung dar. Der Sensor 5 ist über eine Leitung 7 mit einer Erfassungseinrichtung 9 verbunden, die einen Rechner 11 und einen damit verbundenen Speicher 13 umfaßt. In dem Rechner 11 sind verschiedene Funktionen oder Routinen mit Programmbausteinen realisiert. Dies können beispielsweise Meßfunktionen, Bearbeitungsroutinen, Signalisierungsabläufe, oder Grenzwertüberwachungen sein.

Zur Signalisierung oder Anzeige von Störzuständen oder Verbrauchswerten ist eine Anzeige 15 vorgesehen. Zum Daten- oder Informationsaustausch ist der Rechner 11 wahlweise mit einem Schnittstellenbaustein 17 verbunden, der einen Ausgang 19 zum Verbinden mit einer weiteren informationsverarbeitenden Einrichtung, z. B. einem Rechner oder einer leittechnischen Einrichtung, aufweist.

Alternativ oder optional kann an der Rohrleitung 1 auch ein weiterer Sensor, insbesondere ein Temperaturfühler 21 angeordnet sein, der ebenfalls mit dem Rechner 11 verbunden ist. Bei einer Wärmemengenmessung ist eine Kombination von Durchfluß- und Temperaturmessung erforderlich.

Nachfolgend werden anhand der FIG beispielhaft die verschiedenen Möglichkeiten einer Erkennung von nicht betriebsgemäßen Zuständen näher erläutert. Die jeweiligen Lösungen können einzeln oder auch in beliebigen Kombinationen miteinander realisiert werden. Gegebenenfalls sind auch durch Kombinationen oder Meßwertverknüpfungen weitere nicht näher beschriebene Fehlerzustände detektier- oder erkennbar, ohne daß der Grundgedanke der vorliegenden Idee verlassen wird.

### Temperaturerfassung

Die Temperatur des Mediums wird unter anderem auch zur Ermittlung des exakten Durchflußmengenwertes des Mediums benötigt. Die Temperaturüberwachung dient vorliegend zur Überwachung einer Manipulation an der Gastemperatur oder auch einer thermischen Manipulation des Zählers 3. In der Regel hat das Medium nämlich eine relativ konstante Temperatur.

Der Temperaturfühler 21 liefert ein Meßsignal über die Temperatur des Mediums an den Rechner 11. Der Rechner 11 weist ein nicht näher gezeigtes Grenzwertglied auf, das zur Überwachung eines oder mehrerer Signale oder Meßwerte dient. Das Grenzwertglied kann dabei in positiver oder negativer Richtung arbeiten und gegebenenfalls auch gestaffelte Grenzwertbearbeitungen mit mehreren Grenzwerten durchführen. Es findet dabei ein Vergleich zwischen einem vorliegenden Temperaturmeßwert und einem im Speicher 13 abgelegten Grenzwert im Sinne einer Überwachung statt. Bei einer Grenzwertüberschreitung erfolgt eine Signalisierung. Fremdgeräuschpegelüberwachung Der Sensor 5 kann beispielsweise Teil eines Durchflußmessers auf Ultraschallbasis sein, insbesondere eine Sensoranordnung, welcher den Zähler 3 bildet. In diesem Fall ist eine Empfangseinrichtung auf Ultraschallbasis vorhanden, die zur Laufzeitmessung des Mediums dient. Bei einem derartigen Meßprinzip wäre es beispielsweise denkbar, daß mittels eines weiteren Ultraschallsenders, z. B. einer Fernbedienung, insbesondere einer programmierbaren Fernbedienung, von außen eine Manipulation am Zahler 3 vorgenommen wird.

Die Erfassungseinrichtung 9 weist dazu eine Funktion einer Fremdgeräuschpegelerfassung auf, die vom Rechner 11 realisiert ist. Der Sensor 5 nimmt die Fremdsignale auf. Es wird dabei der Pegel des Fremdgeräusches erfaßt und wiederum mit Hilfe eines Grenzwertgliedes mit einem im Speicher 13 abgelegten Wert verglichen. Bei einer Grenzwertüberschreitung erfolgt wieder eine Fehlersignalisierung über die Anzeige 15 oder über den Ausgang 19. Selbstverständlich ist auch eine weitere (Vor-) Verarbeitung im Rechner 11 und/oder eine Abspeicherung der jeweiligen Daten oder Werte im Speicher 13 möglich.

Es ist gegebenenfalls auch denkbar, daß für den Vergleich als Grenzwert eine Signal form, ein Signalspektrum oder ein anderer Parameter herangezogen wird, so daß eine Identifizierung der Störung möglich ist.

### Gasartwechsel

Wird für den Sensor 5 eine Ultraschallmeßanordnung mit wechselnder Meßrichtung im Medium verwendet, so kann der Laufzeitunterschied in und gegen die Durchflußrichtung 2 des Mediums auf eine Grenzwertüberschreitung überwacht werden. Wenn zwischen diesen beiden Messungen ein erheblicher Unterschied auftritt, so kann auf ein Wechsel des Mediums, z. B. der Gasart oder der Temperatur des Mediums, geschlossen werden. Dies kann als Indiz für eine Manipulation gelten. Zur klaren Fehleraussage kann hierzu eine Kombination mit einer Temperaturüberwachung vorgesehen werden.

### Rückwärtsflußüberwachung

Bei zumindest einem elektronischen Zähler, insbesondere einem Ultraschallzähler, wird die Durchflußmenge aufaddiert und im Speicher 13 abgelegt. Gesondert hierzu wird die Durchfluß-menge der entgegengesetzten Durchflußrichtung, also quasi ein Negativwert, gespeichert. Prinzipiell ist diese Speicherung auch bei einem mechanischen Zähler denkbar.

Überschreitet der Wert der entgegengesetzten Durchflußrichtung einen vorgegebenen Grenzwert, so wird ein Fehlersignal erzeugt. Es kann nämlich daraus geschlossen werden, daß der Sensor 5 in seiner Einbaurichtung umgedreht wurde.

Zusätzlich kann der Betrag des Rückwärtsflusses mit dem Wert des positiven Durchflusses addiert werden. Auf diese Weise kann dann unabhängig von der Einbaurichtung des Sensors 5 die Summe des Verbrauchs - trotz Manipulation - festgestellt werden. Gegebenenfalls kann jedoch auch der Durchfluß in beide Richtungen separat angezeigt und ausgegeben werden. Hierzu ist es auch denkbar, daß ein neuer Zähler zunächst keine bevorzugte Zählrichtung hat. Sein Einbau ist also richtungsunabhängig. Seine positive Zählrichtung wird automatisch durch den größten Wert einer Durchflußrichtung vom Rechner 11 festgelegt.

Die einzelnen obengenannten Funktionen eignen sich insbesondere zum Aufzeichnen und zur Bereitstellung von Bezugsdaten für eine statistische Auswertung, wobei eine verbesserte Erkennung von Betrugs- und Betriebsfehlern gegeben ist.

Insgesamt eignen sich die beschriebenen Funktionen besonders für einen digitalen Zähler. Mit dem oder den Grenzwertglied/ern ist/sind wahlweise spontane Crenzwertüberschreitungen oder auch Überschreitungstendenzen überwachbar, die auf längere Zeitdauern ausgerichtet sind. Es ist auch denkbar, daß die aufgezeigten Überwachungen mit Hilfe eines Fuzzy-Algorithmus überwacht werden, so daß auch kritische Betriebs zustände klar erkannt werden, ohne daß eine einzelne Grenzwertüberschreitung gegebenenfalls vorliegt. Es besteht auch die Möglichkeit, daß trotz mehrerer Grenzwertüberschreitungen bestimmter Art ein betriebsgemäßer Zustand erkannt werden kann.

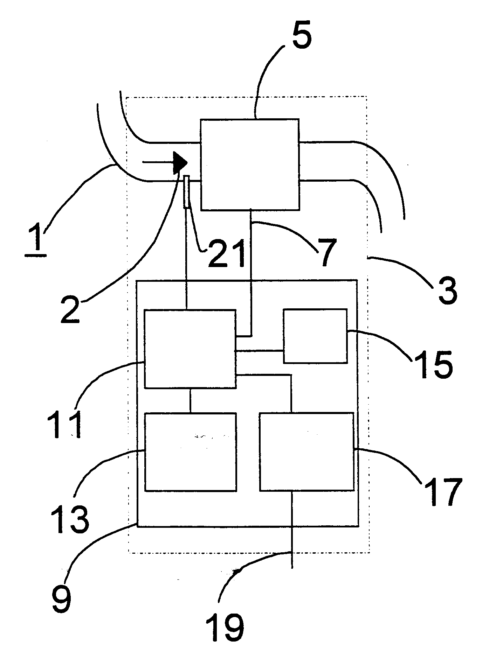

## Patentansprüche

1. Zähler (3) für ein fließendes Medium, insbesondere Wasser oder Gas, mit Mitteln zum Erfassen eines Fremdeinflusses oder Manipulationsversuchs, umfassend:
- zumindest einen Sensor (5) zum Erfassen einer Zustandsgröße oder eines Wertes des Mediums,
- eine Erfassungseinrichtung (9), die mit dem Sensor (5) verbunden ist, und
- ein Grenzwertglied, welches ein Fehlersignal erzeugt, wenn das vom Sensor (5) abgegebene Signal oder ein davon abgeleitetes Signal einen vorgegebenen Grenzwert überschreitet,
wobei der Grenzwert entsprechend einem nicht betriebsmäßigen Zustand des Mediums oder entsprechend einem vom Sensor erfaßten Signal vorgegeben ist.

2. Zähler nach Anspruch 1, wobei der Sensor (5) zum Erfassen einer Durchflußmenge dient, wobei in der Erfassungseinrichtung (9) als Zustandsgröße positive und negative Durchflußmengen gesondert speicherbar sind, und wobei zumindest die negative Durchflußmenge auf eine Grenzwertüberschreitung überwachbar ist.

3. Zahler nach Anspruch 2, wobei der Betrag der negativen Durchflußmenge bildbar und mit den positiven Durchflußmengen addierbar ist, und wobei die erhaltene Gesamtdurchflußmenge als Verbrauchswert speicherbar ist.

4. Zähler nach Anspruch 1, 2 oder 3, wobei der Sensor (5) als Ultraschallmeßeinrichtung zur Ermittlung der Laufzeit im Medium ausgebildet ist, und wobei der erfaßte Laufzeitwert auf eine vorgegebene Grenzwertüberschreitung überwachbar ist.

5. Zähler nach Anspruch 4, wobei die Ultraschallmeßeinrichtung zumindest einen Schallsensor, insbesondere einen Ultraschallsensor, umfaßt, wobei die Erfassungseinrichtung (9) Mittel zum Erfassen eines Fremdgeräuschpegels aufweist, und wobei der Fremdgeräuschpegel auf eine Grenzwertüberschreitung überwachbar ist.

6. Zähler nach Anspruch 4 oder 5, wobei die Ultraschallmeßeinrichtung eine wechselnde Sende- und Empfangsrichtung aufweist, wobei abwechselnd eine Laufzeitmessung im Medium mit der und gegen die Strömungsrichtung des Mediums durchführbar ist, und wobei der Unterschied der beiden Laufzeiten auf eine Grenzwertüberschreitung überwachbar ist.

7. Zähler nach einem der Ansprüche 1 bis 6, wobei der Sensor (5) einen Temperatursensor umfaßt, und wobei die Temperatur des Mediums auf eine Grenzwertüberschreitung überwachbar ist.
